Europäisches Patentamt

European Patent Office

Office européen des brevets

(11) Publication number: **0 243 105 B1**

(12) **EUROPEAN PATENT SPECIFICATION**

(45) Date of publication of patent specification: **19.06.91**  (51) Int. Cl.⁵: **D04B 1/00, B29C 67/14**

(21) Application number: **87303383.1**

(22) Date of filing: **16.04.87**

(54) Composite element and reinforcement therefor.

(30) Priority: **18.04.86 GB 8609491**

(43) Date of publication of application:
**28.10.87 Bulletin 87/44**

(45) Publication of the grant of the patent:
**19.06.91 Bulletin 91/25**

(84) Designated Contracting States:
**DE ES FR GB IT**

(56) References cited:
**DE-A- 2 927 414**
**DE-B- 2 012 733**
**US-A- 2 201 980**
**US-A- 3 045 319**
**US-A- 3 934 064**

(73) Proprietor: **COURTAULDS PLC**
**18, Hanover Square**
**London W1A 2BB(GB)**

(72) Inventor: **Robinson, Frank**
**9 Field Close**
**Breaston Derbyshire(GB)**
Inventor: **Williams, Dennis John**
**6 West Bank Avenue**
**Derby Derbyshire(GB)**

(74) Representative: **Newby, John Ross et al**
**J.Y. & G.W. Johnson Furnival House 14/18**
**High Holborn**
**London WC1V 6DE(GB)**

## Description

This invention relates to a composite element incorporating a knitted fabric reinforcement in a synthetic resin matrix. A composite element comprises reinforcing material impregnated with, or embedded in a matrix of, synthetic resin and the present invention is concerned with the manufacture of composite elements produced using a specially produced knitted fabric.

The use of knitted fabric as reinforcement for composite elements has been proposed before. The present invention proposes that such reinforcement should be formed to a desired configuration by folding weft or warp knitted fabric, thus enabling a great variety of shapes of reinforcement to be formed using very similar knitting operations on similar knitting machines.

It has been proposed in US-A-2201980 to knit a fabric for wearing apparel so that it naturally pleats along lines where wales are missing on one surface of the knitted fabric. It has also been proposed in DE-B-2012733 to reinforce synthetic resin based composite elements with a knitted fabric which is provided with spaced-apart regions where wales are missing from one surface or the other of the fabric so that the fabric naturally folds along the said regions to form a corrugated core for a laminated sheet.

The use of knitted fabric as reinforcement for composite elements has been proposed before. The present invention proposes that such reinforcement should be formed to a desired configuration by folding weft or warp knitted fabric, thus enabling a great variety of shapes of reinforcement to be formed using very similar knitting operations on similar knitting machines.

According to the invention a composite element comprising a synthetic resin matrix reinforced by a knitted fabric having a plurality of linear regions each structured so as to constitute a natural fold line in the fabric, the fabric being folded at each fold line so that the parts of the fabric which would lie on either side of each linear region when the fabric is flat and unfolded lie at an angle to each other in the matrix, is characterised in that a first structure is used in a region when the angle of the fold at the fold line is to be 90° and a wider structure is used in a region when the angle of fold at the fold line is to be 180°.

Each fold line can extend in the wale or course direction.

Advantageously, the knitted fabric used as reinforcement in a composite element according to the invention may comprise a double jersey structure, that is a weft knitted structure in which loops are pulled to both faces of the fabric. Each linear region constituting a fold line in the fabric may then comprise a region in which the balance of loops in the two fabric faces is broken, possibly in such a way that, in the region constituting the fold line, loops are pulled to one face of the fabric only.

The invention will be further described with reference to the accompanying drawings, in which:-

Figure 1 illustrates diagrammatically the knitted structure of a part of a weft knitted fabric suitable for use in a composite element according to the invention,

Figure 2 is another type of diagram showing the whole of a cross-section through the fabric of Figure 1,

Figure 3 is a diagrammatic cross-section illustrating the reinforcement of a composite element formed by folding the fabric of Figures 1 and 2,

Figures 4 to 7 are diagrammatic cross-sections illustrating further reinforcements of composite elements formed by folding other fabrics according to the invention,

Figures 8 and 9 are cross-sections of reinforcement formed into corrugated shape,

Figure 10 is a lapping diagram for a warp knitted fabric for use as a reinforcement in a composite element according to the invention,

Figure 11 is a schematic cross-section through a composite element reinforcement fabric knitted in accordance with the lapping movements shown in Figure 10, and

Figure 12 is a diagrammatic illustration of a composite element including the fabric of Figure 11 when folded.

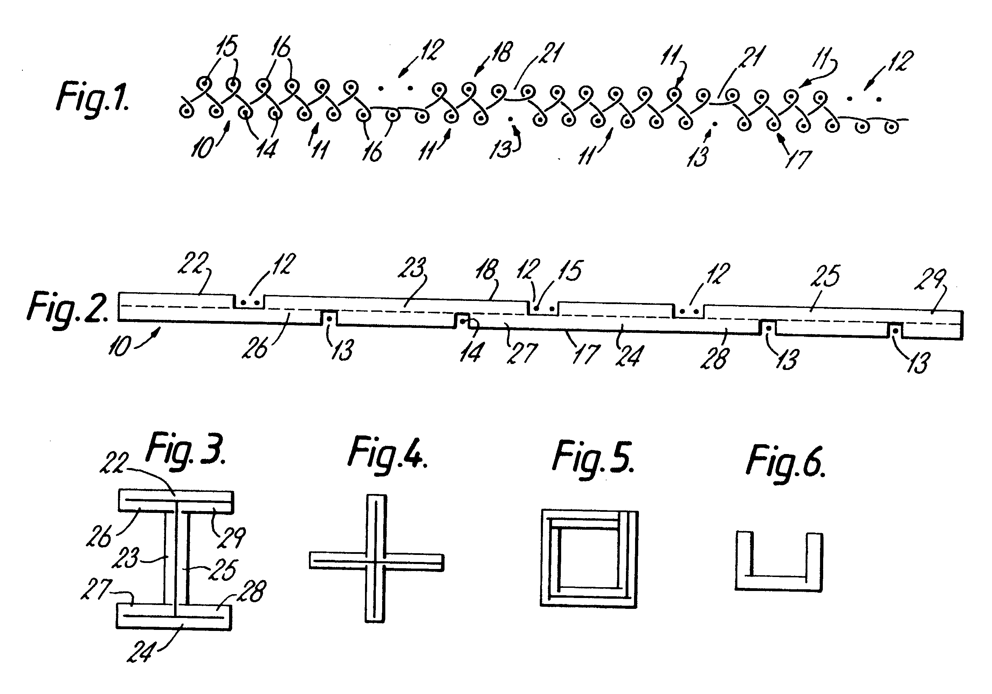

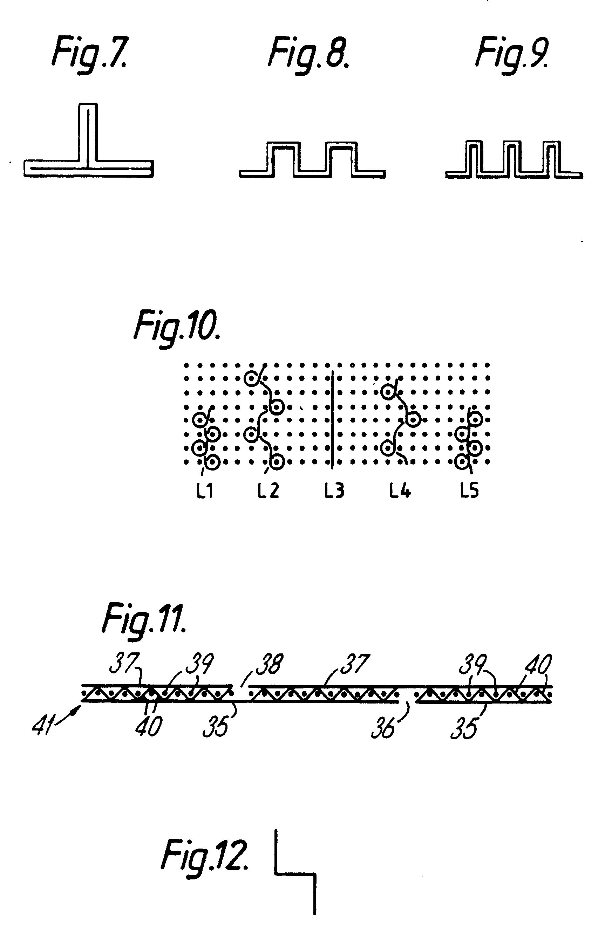

The invention proposes one structure for fold lines intended to fold through 90° and a wider structure for fold lines intended to fold through 180° and accordingly the invention will not be manifest by sole consideration of a matrix folded up with only 90° folds or one folded up with 180° folds (i.e. the single layer folded shapes shown in Figures 6, 8, 9 and 12 or the fabric shown in Figures 10 and 11).

The fabric illustrated in Figures 1 to 3 may be knitted on a weft knitting machine which has two opposed arrays of knitting needles and is thus capable of knitting double jersey structures, for example a flat V-bed knitting machine, a double jersey circular knitting machine or a fully-fashioned knitting machine with two opposed arrays of needles.

A double jersey structure for a weft knitted fabric for use in a composite element according to the invention must be such that each linear region can be formed in it to produce a fold line in the fabric. Double jersey structures such as 1 x 1 rib and 2 x 2 rib constitute such structures. Milano and half-milano structures may be useful, in some circumstances at least.

Figure 1 illustrates diagrammatically a cross-section through the loop structure of a weft knitted fabric 10 according to the invention. The bulk of the fabric is formed in a double jersey structure, 1 x 1 rib, which can be seen in regions 11 of the fabric. In spaced linear regions 12 and 13 of the fabric fold lines are formed by adapting the knitted structure so that, in each of these linear regions 12 and 13, the balance of the rib structure is broken and loops are pulled, in the linear region, to one face of the fabric only. The two arrays of needles of a flat V-bed knitting machine are indicated in Figure 1 by the two rows of points 14 and 15. Over the major part of the fabric 10 in Figure 1, knitted loops 16 are pulled alternately to the front face 17 and to the back face 18 of the fabric, that is loops 16 are formed alternately on needles 14 of the front needle bed of the machine and on needles 15 of the back needle bed of the machine. In the two linear regions 13 of the fabric 10 shown in Figure 1, however, the balance of the fabric is broken and a needle 14 on the front bed is left devoid of knitted loops so that in each knitted course two adjacent loops are pulled to the back face of the fabric. Thus, in the linear regions 13, loops are pulled to the back face of the fabric only, the balance of loops in the front and rear faces of the fabric in the regions 13 may, however, be broken by using other unbalanced stitch structures instead of a complete change from double jersey to single jersey fabric.

Each region 13 may be regarded as having a width equal to the gap 21 between a pair of adjacent wales in the fabric 10 (which is of course the same as the gap between adjacent loops 16) but it might also be considered to have a width equal to one loop 16 since it is created by omission of one such loop from the front face 17 of the fabric in each course of the fabric.

In each of the two linear regions 12 constituting a fold line shown in Figure 1, the balance of the rib structure is broken by leaving two adjacent needles 15 of the back needle bed free of knitted loops so that in each region 12 three adjacent loops 16 of each course of knitting are pulled to the front face 17 of the fabric. Each linear region 12 may be regarded as having a width equal to two wale spacings and one loop 16 or equal to two knitted loops 16 and one wale spacing.

In the fabric 10 shown in Figure 1, the spacing of linear regions 12 and 13 is not constant and the reason for this will be explained with reference to Figures 2 and 3. The fold lines at the linear regions 13 in the fabric of Figure 1 have a natural angle of fold of 90°, that is, with little constraint or support, the fabric 10 will tend to fold at an angle of 90° along the regions 13. At the wider regions 12, the fabric tends to fold at an angle of 180°. Thus, the fabric of Figure 1 embodies, at spacings of long and short intervals linear regions at which it tends to fold at 90° and linear regions at which it tends to fold at 180° This structure is illustrated in Figure 2 where the wider fold regions 12 are shown containing two empty needles 15 and the narrower fold regions 13 are shown containing one empty needle 14. Figure 2 shows a complete diagrammatic cross-section of a piece of fabric 10 whereas Figure 1 shows only a part of the piece of fabric. The numbers of loops shown in various regions of the fabric 10 in Figure 1 are entirely nominal and do not correspond to the numbers of loops which would be found in an actual fabric. However, the spacing of the linear regions 12 and 13 in the fabric is such that the fabric is divided in the course-wise direction (Figure 2) into regions 22,23,24 and 25, which may be designated as having a width 2x, and into regions 26,27,28 and 29 which will then be designated as having a width x. Further, the orientation of the unbalancing of the knitted structure in the linear regions 12 and 13 determines the direction in which the fabric 10 will tend to fold at the linear region concerned. If loops are omitted from the structure in the back face 18 of the fabric, the fold will take place about a line in that face, that is, in Figure 2, the fabric region 22 will tend to fold clockwise through 180° onto the upper (back) face 18 of the fabric region 26 (which it will overlap) The fabric region 26 on the other hand will tend to fold anti-clockwise in Figure 2 to extend downwards in the Figure at right angles to the fabric region 23.

Thus, the piece of fabric 10 shown in Figure 2 is easily formed, by allowing it to fold naturally at the linear regions 12 and 13, into the fabric reinforcement having an I-shaped cross-section shown in Figure 3. After impregnation of the reinforcement of Figure 3 with a synthetic resin followed by curing, a composite element with a I-shaped cross-section can be produced.

In the fabric 10 of Figures 1, 2 and 3, the linear regions 12 and 13 are straight and extend in the wale direction of the fabric. Curved linear regions constituting fold lines may be formed in the fabric by altering the stitch structure as the knitting progresses so that the region or regions of unbalance in the fabric, where, in the present case, loops are pulled to one face of the fabric only, shifts progressively across the fabric. Provided that that shift is not too pronounced so that a reasonably gentle curve is imparted to the fold line the fabric will still be foldable at that line if the knitted structure is sufficiently loose to allow it.

Fold lines extending in the course direction of the fabric may also be formed in reinforcement according to the invention. When the basic fabric structure is a double jersey structure (which is, of course, knitted on needles of both needle arrays), a knitting machine must be used in which loops can be transferred between needles of the opposed needle arrays. To form a course-wise fold line all loops are transferred from one needle array to the other and one or more courses are knitted on the said other needle array only before continuing knitting in the basic fabric structure, if necessary transferring loops back to the empty needles of the said one needle array.

Figures 4 to 9 illustrate in cross-section a number of reinforcements formed from folded fabric.

Figure 4 is a reinforcement which is cross-shaped in cross-section formed from a fabric having seven fold lines spaced at equal intervals in the fabric and all having a knitted structure such that if the fabric is folded in accordance with its natural tendency the shape shown is produced.

A reinforcement having the cross-section of a box girder, that is a rectangular cross-section, is shown in Figure 5. The reinforcement of Figure 6 has a U-shaped cross-section and that of Figure 7 a cross-section in the form of an inverted T.

Figures 8 and 9 show reinforcements having, as shown, a corrugated configuration which might serve as a basis for panelling elements or supports for flooring, that is, they might serve as reinforcements for sheet material.

A warp knitted fabric showing structures for just 90° folds is shown in Figures 10 to 12. The fabric is knitted on a twin needle bar Raschell warp knitting machine using five guide bars which may be designated L1 to L5 in the direction from front to back of the machine. The guide bars are threaded in the following pattern:-

L1:    Thread 12, miss 1, thread 12, miss 1, thread 12.

L2:    Thread 25, miss 1, thread 12

L3:    Thread 12, miss 1, thread 12, miss 1, thread 12.

L4:    Thread 12, miss 1, thread 25

L5:    Thread 12, miss 1, thread 12, miss 1, thread 12.

In the lapping diagram of Figure 10, alternate horizontal rows of points indicate knitting operations on the front and back beds alternately. The guide bar L2 supplies yarn exclusively to the front needle bed of the machine to form the face fabric 35 (Figure 11) and it will be seen that since one eylet of the guide bar 12 is unthreaded ("miss" in the threading set-out) a gap 36 is left in this fabric. Similarly, the guide bar L4 supplies yarn exclusively to the rear needle bed to form the face fabric 37 with a gap 38 left in it. The guide bar L3 supplies yarns 39 laid to extend longitudinally between the face fabrics 35 and 37 to provide longitudinal strength in the fabric. The guide bars L1 and 15 each supply yarns alternately to the front and back needle beds providing connecting yarns 40 between the face fabrics 35 and 37 shown only diagrammatically in Figure 11. The total fabric 41 is thus made up of the face fabrics 35 and 37 and the interconnecting yarns 40 together with the strengthening yarns 39. Because of the gaps 36 and 38 in the face fabrics 35 and 37, the fabric folds naturally at the linear regions constituted by these gaps which thus constitute natural fold lines in the fabric. Because the gaps 36 and 38 are formed in opposite face fabrics, the fabric 41 will tend to fold in opposite directions at the two gaps in the manner shown in Figure 12 where it is seen that the fabric folds in each case around the gap, that is the gap is on the inside of the bend formed at the fold.

The natural angle of the fold will depend on the nature and thickness (decitex) of the yarn used and on the modulus of the yarn used, that is for the same geometric configuration of loops in the fabric and yarn in the loops, the angle of fold will be proportional to the modulus. Further, it will be dependent on the number of needle spacings encompassed, that is on the number of knitted loops corresponding to the gap width. The greater the number of thread ends omitted at a gap the greater the natural angle of fold will be. Normally up to three thread ends omitted (empty needles) at the gap will be sufficient to achieve a 180° fold.

It will be seen that by adjusting the threading of the guide bars the dimensions of the fabric parts can be adjusted as well as the direction and angle of folding and numerous reinforcements can be made, for example reinforcements as illustrated in Figures 3 to 9.

If strength requirements in the final product require it, each of the shaped reinforcements illustrated can include a plurality of layers of folded fabric. Two such layers are in fact shown in Figure 5 and two (or more) layers can be employed for the shapes shown in Figures 3, 4, 6-9 and 12. The box girder reinforcement of Figure 5 can be continued in spiral fashion to provide more than two layers in the final reinforcement produced.

Any of the conventionally available filamentary materials including glass, carbon, graphite, boron, silicon carbide and high performance aromatic polymers (such as the material known under the Trade Mark "Kevlar") can be used for knitting the reinforcements described herein.

## Claims

1.    A composite element comprising a synthetic resin matrix reinforced by a knitted fabric (10) having a plurality of linear regions (12-13) each structured so as to constitute a natural fold line in the fabric, the fabric being folded at each fold line so that the parts of the fabric which would lie on either side of each linear region when the fabric is flat and unfolded lie at an angle to each other in the matrix, characterised in that a first structure (13) is used in a region when the angle of the fold at the fold line is to be 90° and a wider structure (12) is used in a region when the angle of fold at the fold line is to be 180°.

2. An element as claimed in claim 1, characterised in that the first structure (13) is created by breaking the balance of loops (16) in the two faces (17, 18) of the fabric for one line of one loop.

3. An element as claimed in claim 2, characterised in that the wider structure (12) is created by breaking the balance of loops (16) in the two faces (17, 18) of the fabric for one line of two adjacent loops.

4. A composite element as claimed in claim 2 or claim 3, characterised in that in each said region the balance of loops is broken in such a way that loops are pulled to one face (17 or 18) of the fabric (10) only.

5. A composite element as claimed in any one of claims 1 to 4, characterised in that the fabric is folded to a configuration having a cross-shaped cross-section.

6. A composite element as claimed in any one of claims 1 to 4, characterised in that the fabric is folded to a configuration having a rectangular cross-section.

7. A composite element as claimed in any one of claims 1 to 4, characterised in that the fabric is folded to a configuration having an I-shaped cross-section.

8. A composite element as claimed in any one of claims 1 to 4, characterised in that the fabric is folded to a configuration having a T-shaped cross-section.

**Revendications**

1. Elément composite comprenant une matrice en résine synthétique renforcée par un tricot (10) présentant une pluralité de régions linéaires (12-13) structurées chacune pour constituer une ligne de pliage naturel dans le tricot, le tricot étant plié à chaque ligne de pliage de manière que les parties du tricot qui seraient situées de part et d'autre de chaque région linéaire lorsque le tricot est disposé à plat, sans plis, soient situées sous un angle l'une par rapport à l'autre dans la matrice, caractérisé en ce qu'une première structure (13) est utilisée dans une région lorsque l'angle du pli formé à la ligne de pliage doit être de 90° et une structure plus large (12) est utilisée dans une région lorsque l'angle du pli formé à la ligne de pliage doit être de 180°.

2. Elément selon la revendication 1, caractérisé en ce que la première structure (15) est créée par la rupture de l'équilibre entre les boucles (16) des deux faces (17, 18) du tricot dans une ligne ayant la largeur d'une boucle.

3. Elément selon la revendication 2, caractérisé en ce que la structure plus large (12) est créée par la rupture de l'équilibre entre les boucles (16) des deux faces (17, 18) du tricot dans une ligne ayant la largeur de deux boucles voisines.

4. Elément composite selon la revendication 2 ou 3, caractérisé en ce que l'équilibre des boucles est rompu dans chacune desdites régions par le tirage de boucles vers une face (17 ou 18) seulement du tricot (10).

5. Elément composite selon l'une quelconque des revendicatons 1 à 4, caractérisé en ce que le tricot est plié en une configuration ayant la forme d'une croix en section droite.

6. Elément composite selon l'une quelconque des revendications 1 à 4, caractérisé en ce que le tricot est plié en une configuration ayant une section droite rectangulaire.

7. Elément composite selon l'une quelconque des revendications 1 à 4, caractérisé en ce que le tricot est plié en une configuration ayant une forme en I en section droite.

8. Elément composite selon l'une quelconque des revendications 1 à 4, caractérisé en ce que le tricot est plié en une configuration ayant une forme en T en section droite.

**Ansprüche**

1. Verbundelement bestehend aus einer Kunststoffharzmatrix und einem verstärkenden Strick- oder Gewirkstoff (10) mit mehreren, jeweils als natürliche Faltlinien des Stoffes strukturierte Linearbereichen (12-13), wobei der Stoff entlang den Faltlinien jeweils so gefaltet ist, daß die Teile des Stoffes, die im flachen, ungefalteten Zustand des Stoffes jeweils beiderseits der Linearbereiche liegen würden, in der Matrix unter einem Winkel zueinander liegen, dadurch gekennzeichnet, daß diejenigen Linearbereiche, in denen der Winkel der Faltung an der Faltlinie 90° betragen soll, jeweils als eine erste Struktur (13) ausgebildet sind und diejenigen, in denen der Winkel der Faltung an der Faltlinie 180° betragen soll, als eine breitere Struktur (12).

2. Verbundelement nach Anspruch 1, dadurch gekennzeichnet, daß sich die erste Struktur (13) durch Aufhebung des Gleichgewichts zwischen den Maschen (16) auf beiden Seiten (17,18) des Stoffes bezüglich einer Maschenreihe ergibt.

3. Verbundelement nach Anspruch 2, dadurch gekennzeichnet, daß sich die breitere Struktur (12) durch Aufhebung des Gleichgewichts zwischen den Maschen (16) auf beiden Seiten (17,18) des Stoffes bezüglich einer Reihe zweier benachbarter Maschen ergibt.

4. Verbundelement nach Anspruch 2 oder 3, dadurch gekennzeichnet, daß sich in allen Linearbereichen die Aufhebung des Maschengleichgewichts durch Herüberziehung der Maschen zu nur einer Seite (17,18) des Stoffes (10) ergibt.

5. Verbundelement nach einem der Ansprüche 1 bis 4, dadurch gekennzeichnet, daß der Stoff zu einem Körper mit einem kreuzförmigen Querschnitt zusammengefaltet ist.

6. Verbundelement nach einem der Ansprüche 1 bis 4, dadurch gekennzeichnet, daß der Stoff zu einem Körper mit einem rechteckigen Querschnitt zusammengefaltet ist.

7. Verbundelement nach einem der Ansprüche 1 bis 4, dadurch gekennzeichnet, daß der Stoff zu einem Körper mit einem I-förmigen Querschnitt zusammengefaltet ist.

8. Verbundelement nach einem der Ansprüche 1 bis 4, dadurch gekennzeichnet, daß der Stoff zu einem Körper mit einem T-förmigen Querschnitt zusammengefaltet ist.

Fig.1.

Fig.2.

Fig.3.

Fig.4.

Fig.5.

Fig.6.

EP 0 243 105 B1

Fig.7.     Fig.8.     Fig.9.

Fig.10.

L1    L2    L3    L4    L5

Fig.11.

37  39   38   37    39   40

41        40   35          36    35

Fig.12.